# EUROPEAN PATENT APPLICATION

(11) **EP 4 459 458 A1**
(43) Date of publication of application: **06.11.2024**
(21) Application number: 22916223.5
(22) Date of filing: 25.03.2022
(51) Int. Cl.: G06F 8/65, G06F 9/54, G06F 9/48, G06F 11/30, G06F 11/32, G06F 8/61

(54) **UPGRADE SYSTEM FOR HOME APPLIANCES, AND METHOD FOR SAME**

(30) Priority: 31.12.2021 KR 20210194645; 21.01.2022 KR 20220009451
(71) Applicant: LG Electronics Inc., Yeongdeungpo-gu Seoul 07336 (KR)
(72) Inventor: RYU, Byoungwook, Seoul 08592 (KR); JUNG, In Sung, Seoul 08592 (KR)
(74) Representative: Vossius & Partner Patentanwälte Rechtsanwälte mbB
(86) International application number: PCT/KR2022/004257
(87) International publication number: WO 2023/128062

(57) **Abstract**

Disclosed is an upgrade system for home appliances with which a user can upgrade a home appliance at a desired time, and a method for same. The upgrade system for home appliances comprises: a server which registers software of a home appliance; and a home appliance which downloads the software from the server and stores same, and carries out an upgrade, when an upgrade trigger occurs, in accordance with the operating state of the home appliance.

## Description

### [Technical Field]

The present disclosure relates to an upgrade of a home appliance, and in particular, an upgrade system for a home appliance and an upgrade method for the same.

### [Background Art]

Home appliances such as a household appliance, an electronic product and the like are placed and operates in a variety of environments, and depending on their launch time points, have a different structure or different component. After they are launched and sold, their functions may need to be upgraded or a function may need to be added to them.

In most cases, the firmware of a home appliance is upgraded to solve an error of the home appliance and the like after the home appliance is sold, and in the case where a new function that meets the needs of the user is added to a home appliance for an upgrade of the home appliance after the home appliance is launched, the user needs to purchase a new home appliance with the new function. It is difficult to provide a newly added function reflecting a change in the customer's lifestyle or a technical advancement to an existing home appliance.

Under the circumstances, there is a growing need to develop a technology for enables the user to readily check an upgradable function, request an upgrade and check an upgrade state or upgrade results, such that the user manages a variety of home appliances connecting to the Internet.

### [Description of the Invention]

### [Technical Problems]

The objective of the present disclosure is to provide an upgrade system for a home appliance and an upgrade method for the same, in which the user may upgrade a home appliance at the time desired by the user.

The objective of the present disclosure is to provide an upgrade system for a home appliance and an upgrade method for the same, in which a home appliance may be upgraded in association with an operation state of the home appliance at the time desired by the user.

The objective of the present disclosure is to provide an upgrade system for a home appliance and an upgrade method for the same, in which an upgrade may proceed depending on an operation state of a home appliance or an upgrade may proceed after a home appliance ends operating.

The objective of the present disclosure is to provide an upgrade system for a home appliance and an upgrade method for the same, in which upgrade reservation time may be automatically delayed in the case where a home appliance is operating at the upgrade reservation time.

The objective of the present disclosure is to provide an upgrade system for a home appliance and an upgrade method for the same, in which the user may select an upgrade triggering time point.

The objective of the present disclosure is to provide an upgrade system for a home appliance and an upgrade method for the same, in which a triggering time point may be automatically delayed depending on a state of a home appliance at the triggering time point for an upgrade.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

An upgrade system for a home appliance in one embodiment may provided a reservation method by which a home appliance may be upgraded at the time desired by the user.

Specifically, the upgrade system for a home appliance in one embodiment comprises a server configured to register software of a home appliance, and a home appliance configured to download software from the server at reservation time and to proceed with an upgrade depending on an operation state of the home appliance.

The upgrade system for a home appliance in one embodiment may proceed with an upgrade of a home appliance in association with an operation state of the home appliance at the time desired by the user.

Specifically, the upgrade system for a home appliance in one embodiment comprises a server configured to register software of a home appliance; and a home appliance configured to download software from the server and to store the software, and at a time when a trigger of an upgrade occurs, to proceed with an upgrade depending on an operation state of the home appliance.

The upgrade system for a home appliance in one embodiment may proceed with an upgrade after a home appliance ends operating, in the case where the home appliance is operating at upgrade reservation time.

Further, the upgrade system for a home appliance in one embodiment may delay upgrade reservation time for predetermined time in the case where a home appliance is operating at the upgrade reservation time.

An upgrade method for a home appliance in one embodiment comprises downloading software from a server at reservation time and proceeding with an upgrade depending on an operation state of a home appliance.

The upgrade method for a home appliance in one embodiment comprises downloading software from a server and storing the software; and proceeding with an upgrade of the software depending on an operation state of a home appliance at a time when a trigger of an upgrade occurs.

### [Advantageous Effects]

An upgrade system for a home appliance and an upgrade method for the same in one embodiment may enable an upgrade of a home appliance at the time desired by the user.

An upgrade system for a home appliance and an upgrade method for the same in one embodiment may enable an upgrade of a home appliance, at the time desired by the user, in association with an operation state of the home appliance.

An upgrade system for a home appliance and an upgrade method for the same in one embodiment may proceed with an upgrade depending on an operation state of a home appliance or after a home appliance ends operating.

An upgrade system for a home appliance and an upgrade method for the same in one embodiment may delay upgrade reservation time automatically in a case where a home appliance is operating at the upgrade reservation time.

An upgrade system for a home appliance and an upgrade method for the same in one embodiment may help to mitigate inconvenience since the user does not need to perform triggering of an upgrade directly, in the case where an upgrade is attempted but fails while a home appliance is operating.

An upgrade system for a home appliance and an upgrade method for the same in one embodiment may prevent a home appliance from falling into a brick mode in the case where an upgrade is attempted but fails while the home appliance is operating.

An upgrade system for a home appliance and an upgrade method for the same in one embodiment may enable the user to select an upgrade triggering time point.

An upgrade system for a home appliance and an upgrade method for the same in one embodiment may delay a triggering time based on a state of a home appliance automatically at the triggering time point for an upgrade.

An upgrade system for a home appliance and an upgrade method for the same in one embodiment may delay an upgrade triggering time point based on a state of a home appliance automatically to prevent a failure in an upgrade.

Specific effects are described along with the above-described effects, in the section of detailed description.

### [Brief Description of the Drawings]

FIG. 1 is a block diagram showing an upgrade system of a home appliance in one embodiment.
FIG. 2 is a block diagram showing the configuration of the home appliance illustrated in FIG. 1.
FIG. 3 is a block diagram showing the configuration of a user terminal illustrated in FIG. 1.
FIG. 4 is a block diagram showing the configuration of a management server illustrated in FIG. 1.
FIG. 5 is a flowchart showing an upgrade method for a home appliance in one embodiment.
FIG. 6 is a flowchart showing the setting of a reservation in the upgrade method for a home appliance in one embodiment.
FIG. 7 is a flowchart showing the performance of a reservation schedule in the upgrade method for a home appliance in one embodiment.
FIG. 8 is a flowchart showing the performance of a reservation in the upgrade method for a home appliance in one embodiment.
FIG. 9 is a block diagram showing a specific configuration of the upgrade system of a home appliance in one embodiment.
FIG. 10 is a block diagram showing a detailed configuration in relation to each function in a communication unit of a home appliance illustrated in FIG. 9.
FIGS. 11a and 11g are views showing a user interface unit that proceeds with an upgrade in the user terminal illustrated in FIG. 9.
FIGS. 12a and 12e are views showing a user interface unit that proceeds with an upgrade in the user terminal illustrated in FIG. 9.
FIG. 13 is a flowchart showing that an upgrade proceeds immediately after completion of a download, in the upgrade method for a home appliance in one embodiment.
FIG. 14 is a flowchart showing that an upgrade proceeds based on a reservation schedule after completion of a download, in the upgrade method for a home appliance in one embodiment.
FIG. 15 is a view showing an upgrade process in another embodiment.

### [Detailed Description of Exemplary Embodiments]

The above-described aspects, features and advantages are specifically described hereinafter with reference to accompanying drawings such that one having ordinary skill in the art to which the subject matter of the present disclosure pertains can embody the technical spirit of the disclosure easily. In the *disclosure, detailed description* of known technologies in relation to the subject matter of the disclosure *is* omitted if it is deemed to *make* the *gist* of the *disclosure* unnecessarily *vague.* Hereinafter, preferred embodiments according to the disclosure are specifically described with reference to the accompanying drawings. In the drawings, identical reference numerals can denote identical or similar components.

Hereinafter, described are an upgrade system of a home appliance and a method for the same with which an upgrade of a home appliance in several embodiments proceeds at the time desired by the user.

Additionally, described are an upgrade system of a home appliance and a method for the same with which an upgrade of a home appliance proceeds in association with an operation state of the home appliance at the time desired by the user.

In the present disclosure, the upgrade of a home appliance may be defined as a process of upgrading software installed in a home appliance. The software may comprise firmware for the operation of a control unit or a micom of a home appliance, and a contents program executed on firmware. In an example, the contents program may be a program for setting the background screen of the display unit of a washing machine, a program for setting an administration course of a washing machine and the like.

In the present disclosure, the upgrade of a home appliance may be defined as comprising a download procedure and an upgrade procedure. Herein, the download may be defined as a procedure of downloading software that is written to a home appliance. The upgrade may be defined as a procedure of writing the downloaded software to a control unit or a micom of a home appliance.

In the present disclosure, the proceeding of firmware over the air (FOTA) may be defined as a procedure of upgrading a home appliance with new software, i.e., a procedure of writing of software to a control unit or a micom of a home appliance.

In the present disclosure, the case where a home appliance is operating or a product is operating may be defined as an operation state in which the home appliance performs its unique function. In an example, the operation state in which a home appliance performs its unique function may be a state in which a washing machine performs a washing function, a state in which a dryer performs a drying function, a state in which an air conditioner performs an air-conditioning function, a state in which an air purifier performs an air-purifying function, and the like.

In the present disclosure, a modem may be defined as a communication unit of a home appliance. In an example, the communication unit may perform functions of transmitting and receiving data, storing downloaded software, setting an software upgrade schedule, tracing upgrade reservation time and the like.

In the present disclosure, the product may be defined as a function control unit performing a unique function of a home appliance. In an example, the function control unit may perform a function such as a washing function of a washing machine, a drying function of a dryer, an air-conditioning function of an air conditioner, an air-purifying function of an air purifier, and the like.

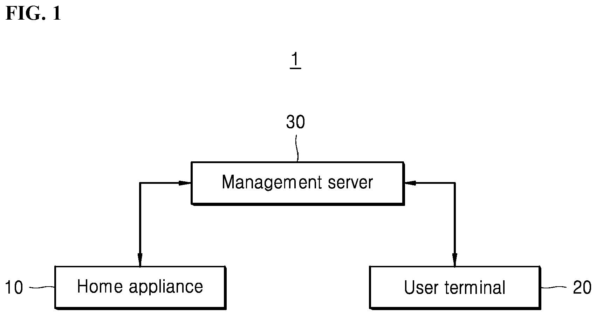

FIG. 1 is a block diagram showing the configuration of an upgrade system of a home appliance in one embodiment.

Referring to FIG. 1, the upgrade system of a home appliance may comprise a home appliance 10, a user terminal 20 and a management server 30.

The home appliance 10 may denote an electronic product that is installed in a residential space of the user and performs a unique function. In an example, the home appliance 10 may comprise a refrigerator, a TV, a washing machine, a dryer, an air conditioner, an air purifier, a medical device, a microwave oven, an electric range, an oven and the like.

The user terminal 20 may be a device possessed by the user. In an example, the user terminal 20 may comprise a smartphone, a laptop, a tablet, a PC, a smart TV, a smart watch and the like. The user may control the function of a plurality of home appliances 10 or set the upgrade of a plurality of home appliances 10 through the user terminal 20. The user terminal 20 and the home appliance 10 may communicate via the management server 30. Alternatively, the user terminal 20 and the home appliance 10 may communicate based on direct short-range communication.

The management server 30 may be a device that manages the home appliance 10 remotely. The management server 30 may communicably connect to the home appliance 10 through a communication network. Additionally, the management server 30 may communicably connect to the user terminal 20, and manage the home appliance 10 in connection with the user terminal 20.

In particular, the management server 30 may store information for upgrading the home appliance 10. The information stored in the management server 30 may comprise software installed in the home appliance 10, information on the home appliance 10, information on the user and the like. The software may comprise firmware of the home appliance 10 and a contents program that is executed on firmware.

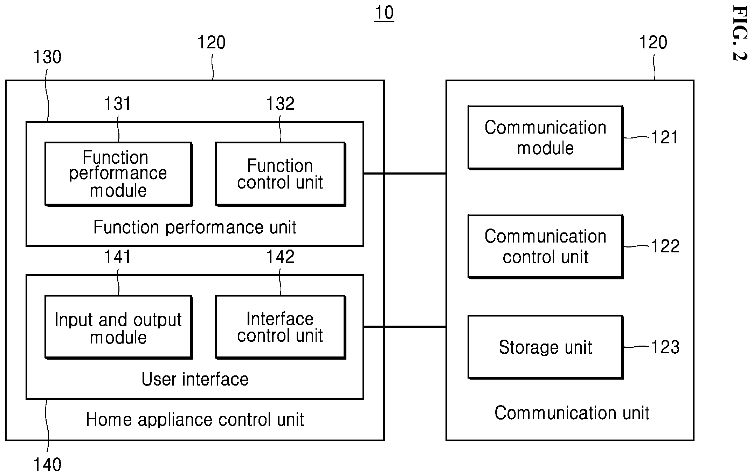

Hereinafter, the configurations of the home appliance 10, the user terminal 20 and the management server 30 are described specifically with reference to FIGS. 2 to 4.

FIG. 2 is a block diagram showing the configuration of the home appliance illustrated in FIG. 1.

Referring to FIG. 2, the home appliance 10 may comprise a home appliance control unit 110 and a communication unit 120. The home appliance control unit 110 may comprise a function performance unit 130 and a user interface unit 140. Additionally, the configuration of the home appliance 10 is not limited to the configuration illustrated in FIG. 2, and a variety of additional components may be included in the home appliance 10.

The communication unit 120, the function performance unit 130 and the user interface unit 140 may transceive data with one another through a local bus.

The home appliance control unit 110 may control an entire operation for performing the functions of the home appliance 10. The home appliance control unit 110 may correspond to a micom. The home appliance control unit 110 may operate based on firmware. To respond to a variety of functions of the home appliance 10, a function control unit 132 may be comprised of a plurality of ones, and comprised of a plurality of micoms that operates based on a plurality of firmware substantially.

Though not illustrated in the drawing, the function control unit 132 may comprise a processor and an internal memory.

The processor may comprise one or more of a central processing unit (CPU), an application processor or a communication processor. The processor may operate based on firmware and execute one or more of instructions in relation to control of the home appliance 10.

The internal memory may be a volatile and/or non-volatile memory. The internal memory may store firmware, and store one or more of instructions in relation to control of the home appliance 10.

The communication unit 120 may communicate with the management server 30. The communication unit 120 may receive software such as firmware and a contents program from the management sever 30, store the received software, and transmit the stored software to at least one of the function performance unit 130 and the user interface unit 140 in the home appliance control unit 110.

The communication unit 120 may comprise a communication module 121, a communication control unit 122 and a storage unit 123.

The transmission and reception module 121 may transceive data. The transmission and reception module 121 may transceiver data based on a wired and/or wireless method.

In the embodiment, the communication module 121 may be a short-range wireless communication module embodying short-range wireless communication. The short-range wireless communication module may be a wireless communication module based on wireless fidelity (WiFi), Bluetooth, radio frequency identification (RFID), infrared data association (IrDA), ultra-wideband (UWB), ZigBee and the like.

In the case where the communication module 121 is a short-range wireless communication module, an access point (not illustrated) may be provided in the residential space of the user. The access point may be a device that relays wireless communication with the management server 30 and the communication module 121. In an example, in the case where the communication module 121 is a WiFi module, the access point may be a WiFi router.

In another embodiment, the communication module 121 may be a long-range wireless communication module embodying long-range wireless communication. The long-range wireless communication module may be a wireless communication module based on code division multiple access (CDMA), frequency division multiple access (FDMA), time division multiple access (TDMA), orthogonal frequency division multiple access (OFDMA), single carrier frequency division multiple access (SCFDMA), 5G and the like.

The communication control unit 122 may control the communication module 121 and the storage unit 123. The communication control unit 122 may correspond to a micom for controlling communication. The communication control unit 122 may operate based on firmware.

The communication control unit 122 may store data, in particular, software data, which are received from the communication module 121, in the storage unit 123. Additionally, the communication control unit 122 may transmit the software data stored in the storage unit 123 to the home appliance control unit 110, the function performance unit 130, and the user interface unit 140, through a local bus.

Though not illustrated in the drawing, the communication control unit 122 may comprise a processor and an internal memory.

The processor may comprise one or more of a central processing unit (CPU), an application processor or a communication processor. The processor may operate based on firmware and execute one or more of instructions in relation to control of the home appliance 10.

The internal memory may be a volatile and/or non-volatile memory. The internal memory may store firmware, and store one or more of instructions in relation to control of the communication unit 120.

The storage unit 123 may be a volatile and/or non-volatile memory, and store software data received from the communication module 121.

The function control unit 132 may be a component performing a unique function provided by the home appliance 10. In an example, the unique function may be a washing function of a washing machine, a drying function of a dryer, an air-conditioning function of an air conditioner, an air-purifying function of an air purifier and the like.

The function control unit 132 may comprise a function performance module 131 and a function control unit 132.

The function performance module 131 may be a module performing the functions described above, and comprise a driving unit comprising a motor, a heating unit, a cooling unit and the like.

The function control unit 132 may control the function performance module 131. The function control unit 132 may correspond to a micom for controlling performance of a function. The function control unit 132 may operate based on firmware.

Though not illustrated in the drawing, the function control unit 132 may comprise a processor and an internal memory. The processor and the internal memory are described above.

The user interface unit 140 may provide operation information of the home appliance 10, information on an upgrade of the home appliance 10 and the like to the user. In an example, the user interface unit 140 may comprise a display module and a speaker module. Additionally, the user interface unit 140 may receive an input for controlling an operation of the home appliance 10 from the user.

The user interface unit 140 may comprise an input and output module 141 and an interface control unit 142.

The input and output module 141 may output operation information of the home appliance 10, and information in relation to an upgrade visually and/or acoustically to the user, and receive input information. In the case where the input and output module 141 is a display module, the input and output module 141 may be a display panel.

The interface control unit 142 may control the input and output module 141. The interface control unit 142 may correspond to a micom for controlling an interface. The interface control unit 142 may operate based on firmware.

Though not illustrated in the drawing, the interface control unit 142 may comprise a processor and an internal memory. The processor and the internal memory are described above.

Additionally, the firmware of the communication control unit 122, the firmware of the function control unit 132, and the firmware of the interface control unit 142 may differ from one another.

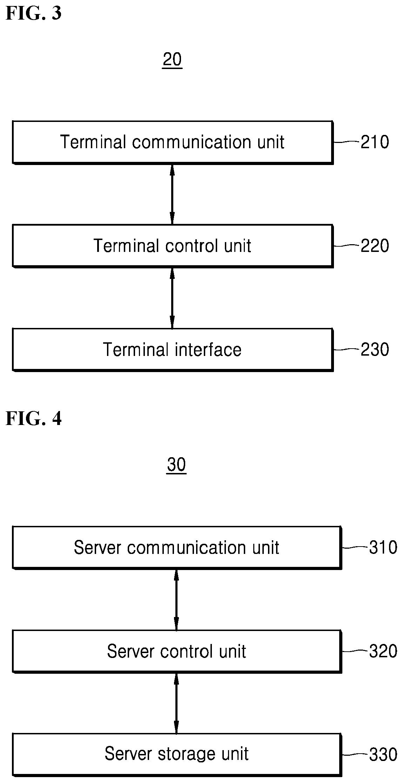

FIG. 3 is a block diagram showing the configuration of a user terminal illustrated in FIG. 1.

Referring to FIG. 3, the user terminal 20 may comprise a terminal communication unit 210, a terminal control unit 220, and a terminal interface unit 230. The user terminal may be a device that transceives information with the home appliance 10 through the server, to perform an upgrade, and may be a smartphone, a smart watch and a tablet PC, or a home hub for a household and an artificial intelligence (AI) speaker that are a separate product product, or a refrigerator, a TV and the like that have the function of transceiving information.

The terminal communication unit 210 may communicate with the management server 30. The terminal communication unit 210 may perform communication based on a wired and/or wireless method. The wireless method may comprise a short-range wireless communication method and a long-range wireless communication method.

The terminal control unit 220 may control the terminal communication unit 210 and the terminal interface unit 230.

Though not illustrated in the drawing, the terminal control unit 220 may comprise a processor and an internal memory. The internal memory may store an application for a terminal, which is for managing the home appliance 10. The processor may execute the application for a terminal.

The terminal interface unit 230 may output a screen on which the application for a terminal is executed. In particular, the terminal interface unit 230 may output information in relation to an upgrade of the home appliance 10 visually and/or acoustically.

FIG. 4 is a block diagram showing the configuration of a management server illustrated in FIG. 1.

Referring to FIG. 4, the management server 30 may comprise a server communication unit 310, a server control unit 320 and a server storage unit 333.

The server communication unit 310 may communicate with the home appliance 10 and the user terminal 20. The server communication unit 310 may perform communication based on a wired and/or wireless method. The wireless method may comprise a short-range wireless communication method and a long-range wireless communication method.

The server control unit 320 may control the server communication unit 310 and the server storage unit 330.

Though not illustrated in the drawing, the server control unit 320 may comprise a processor and an internal memory. The internal memory may store an application for a server, which is for managing the home appliance 10. The processor may execute the application for a server.

The server storage unit 330 may be a volatile and/or non-volatile memory, and store information in relation to an upgrade of the home appliance 10. The information in relation to an upgrade may comprise software data installed in the home appliance 10, information on the home appliance 10, information on the user and the like. The software data may comprise the firmware data and the contents program data of the home appliance.

Further, each of the firmware data and the contents program data may be stored in the server storage unit 330, based on each version. In particular, each of the latest version of firmware data and the latest version of contents program data may be stored in the server storage unit 330, to upgrade software.

Further, as described above, the home appliance 10 may comprise a plurality of control units (micoms) 122, 132, 142, and the firmware of each of the plurality of control units may differ. The server storage unit 330 may store firmware data, for each of the plurality of control units 122, 132, 142.

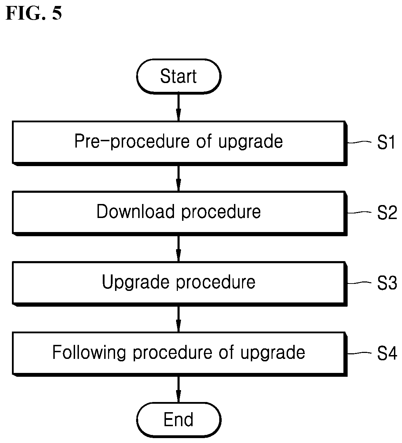

Hereinafter, a process of upgrading software, performed by an upgrade system 4 of the home appliance, is described with reference to FIG. 5.

FIG. 5 is a flowchart showing an upgrade method for software of a home appliance in one embodiment.

An upgrade method may be performed in relation to each of the plurality of home appliances 10 possessed by the user, and for convenience, an upgrade method for the software of one home appliance 10 possessed by the user is described with reference to FIG. 5.

The upgrade method for software may be performed by the home appliance 10, the user terminal 20 and the management server 3, described above, in connection with one another.

Hereinafter, procedures performed in each step are described hereinafter.

In S 10, a pre-procedure of an upgrade may be performed. In S10, the home appliance 10 and the management server 30 may communicably connect to each other, information in relation to an upgrade may be stored in the server storage unit 330, and an upgrade schedule comprising an upgrade cycle, an upgrade reservation and the like may be set.

First, in S20, a download procedure may be performed. Specifically, the management server 30 may transmit software data to the home appliance 10. The software data transmitted from the management server 30 may be received by the communication unit 120 of the home appliance 10 and then stored.

The software data may comprise one or more of software data, and the management server 30 may consecutively transmit one or more of software data to the home appliance 10.

That is, in the case where two or more of the plurality of control units 110, 122, 132, 142 included in the home appliance 10 are upgraded, the management server 30 may consecutively transmit two or more of software data corresponding to two or more of the control units to the home appliance 10.

The order of transmitting two or more of software data may be set in advance. In the case where the function control unit 110 and the interface control unit 142 are upgraded, for example, software data in relation to the function control unit may be transmitted, and then software data in relation to the interface control unit 142 may be transmitted.

Alternatively, the software data may comprise two or more of contents program data, and the management server 30 may consecutively transmit two or more of contents program data to the home appliance 10.

Two or more of the contents program data may respectively be data on a contents program that is executed in one or more of the control units among the plurality of control units 110, 122, 132, 142 included in the home appliance 10. The order of transmitting two or more of the contents program data may be set in advance.

Alternatively, the software data may comprise at least one of firmware data and at least one of contents program data. At this time, the management server 30 also may consecutively transmit at least one of the firmware data and at least one of the contents program data.

Then in S30, an upgrade procedure may be performed.

Specifically, the communication unit 120 may write stored software data to a corresponding control unit among the plurality of control units 122, 132, 142. As the software data are written to the control unit, software may be installed in the control unit.

In the case where the plurality of software data stored in the communication unit 120 comprises two or more of software data, the communication unit may write two or more of the software data respectively to a corresponding control unit.

The order of writing two or more of software data may be set in advance. In the case where the function control unit 132 and the interface control unit 142 are upgraded, for example, software data in relation to the function control unit 132 may be written and then software data in relation to the interface control unit 142 may be written.

Alternatively, in the case where the plurality of software data stored in the communication unit 120 comprises two or more of contents program data, the communication unit may write two or more of the contents program data to a corresponding control unit. The order of writing two or more of contents program data may be set in advance.

Alternatively, in the case where the plurality of software data stored in the communication unit 120 comprises at least one of firmware data and at least one of contents program data, the communication unit may write at least one of the firmware data and at least one of the contents program data to a corresponding control unit.

The order of writing at least one of firmware data and at least one of contents program data may be set in advance. In the case where the plurality of software data is firmware data and contents program data in relation to the user interface unit, for example, the firmware data may be written, and then the contents program data may be written.

In S40, a following procedure of an upgrade may be performed.

In an example, a specific function of software upgraded completely may be set in S40. In particular, in the case where the plurality of software is upgraded completely, a specific function of each of the plurality of software may be set consecutively.

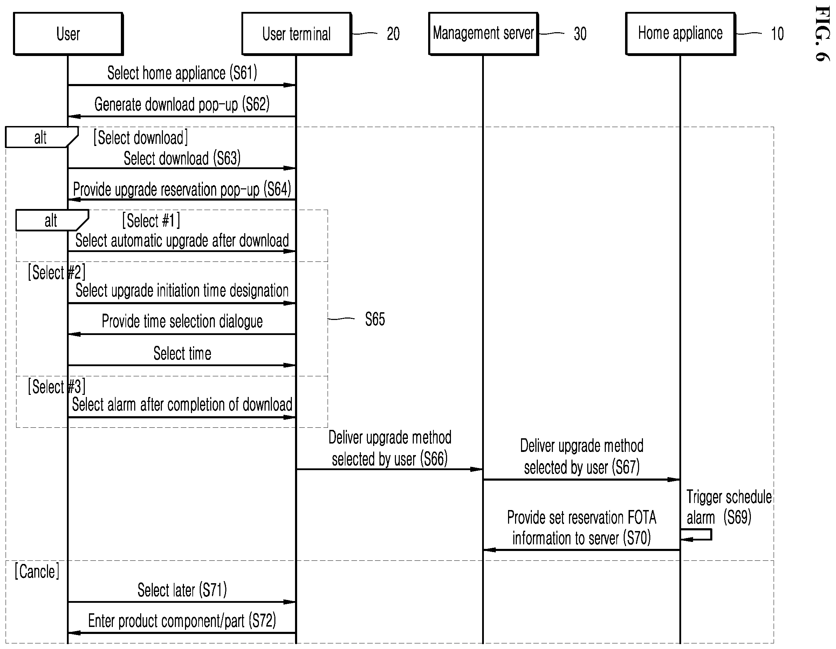

FIG. 6 is a flowchart showing the setting of a reservation in the upgrade method for a home appliance in one embodiment.

Referring to FIG. 6, the user may select a home appliance, through an application installed in the user terminal 20 (S61), and the application may generate a download pop-up in the case where there is new software in relation to the home appliance (S62).

The user may select a download through a pop-up of the application (S63), and the application may provide an upgrade reservation pop-up (S64).

The user may select an upgrade method on the reservation pop-up (S65). In an example, the user may select an automatic upgrade after a download. Alternatively, the user may select upgrade start time designation.

At this time, the application may provide a dialogue for selecting time, and the user may select time through the dialogue. Alternatively, the user may select a notification after a download is completed.

The application of the user terminal 10 may provide the upgrade method selected by the user to the management server 30 (S66).

The management server 30 may deliver the upgrade method selected by the user to a modem of the home appliance 10 (S67). The modem as a communication unit 120 of the home appliance 10 may perform the functions of transceiving data, storing downloaded software, setting a software upgrade schedule, tracing upgrade reservation time, and the like.

The modem of the home appliance 10 may update and set a download schedule (S68), and trigger a schedule alarm (S69).

The modem of the home appliance 10 may provide set reservation FOTA information to the management server 30 (S70). In an example, the reservation FOTA information may comprise reservation information updated for upgrading software between the home appliance 10 and the management server 30.

Further, the user may select reservation time later on an upgrade pop-up (S71), and the application of the user terminal 10 may provide a screen for entering a product part (S72).

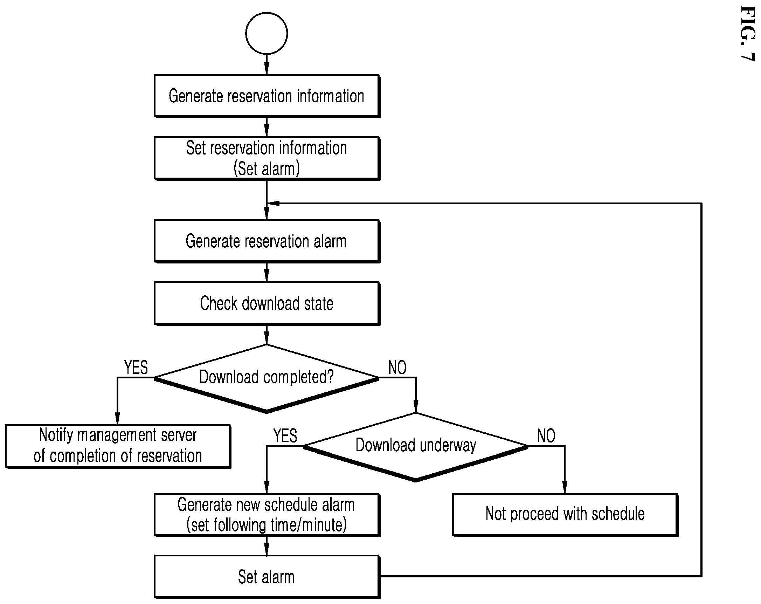

FIG. 7 is a flowchart showing the performance of a reservation schedule in the upgrade method for the software of a home appliance in one embodiment.

Referring to FIG. 7, a flow of the performance of a reservation schedule may be divided into a reservation setting step and a reservation schedule performing step.

In the reservation setting step, the modem may set reservation information in the case where the modem receives reservation information from the management server 30. In an example, the modem sets a reservation alarm.

In the reservation schedule performing step, the modem generates an alarm and checks a download state, and in the case where software is downloaded completely, notifies the management server 30 that a reservation is completed.

In the reservation schedule performing step, the modem generates a new schedule alarm, in the case where software is being downloaded, and sets an alarm. In an example, the modem delays reservation time for predetermined time.

In the reservation schedule performing step, the modem does not perform a schedule in the case where the download of software does not proceed.

A reservation setting procedure in the upgrade method for the software of a home appliance in one embodiment is described as follows.

The modem of the home appliance 10 checks a FOTA state and a proceeding state in the case where the modem receives reservation information from the management server 30.

Software reservation information may be based on information in relation to a cycle that is scheduled in advance according to a program without the user's interference.

The modem checks FOTA, and in the case of FOTA, checks a reservation request tag. One shot FOTA may be defined as performing an upgrade at a time, in which all software in relation to N numbers of micoms in the home appliance is downloaded, and N numbers of the software downloaded completely is written consecutively to N numbers of the micoms.

Alternatively, one shot FOTA may be defined as repeating an upgrade, in which the modem consecutively downloads software in relation to one among N numbers of the micoms in the home appliance at reservation time and upgrades the software in relation to one among N numbers of the micoms, to upgrade N numbers of software consecutively.

The modem checks one shot FOTA, and in the case of one shot FOTA, checks a reservation request tag. One shot FOTA may be defined as performing an upgrade in which all software in relation to N numbers of micoms in the home appliance is downloaded, and the software in relation to N numbers of the micoms is upgraded at a time.

In the case of a reservation cancelation request, the modem stops a set schedule alarm, and updates an upgrade schedule stored therein. Additionally, the modem delivers a reservation setting state to the management server 30.

In the case of a reservation change request, the modem stops a set schedule alarm, sets reservation time to upgrade time changed, and after predetermined time, generates an alarm. Additionally, the modem updates an upgrade schedule stored therein, and delivers a reservation setting state to the management server 30.

In the case of a reservation setting state update request, the modem delivers a reservation setting state to the management server 30. In an example, the reservation setting state update request may be made periodically, between the server and the modem of the home appliance.

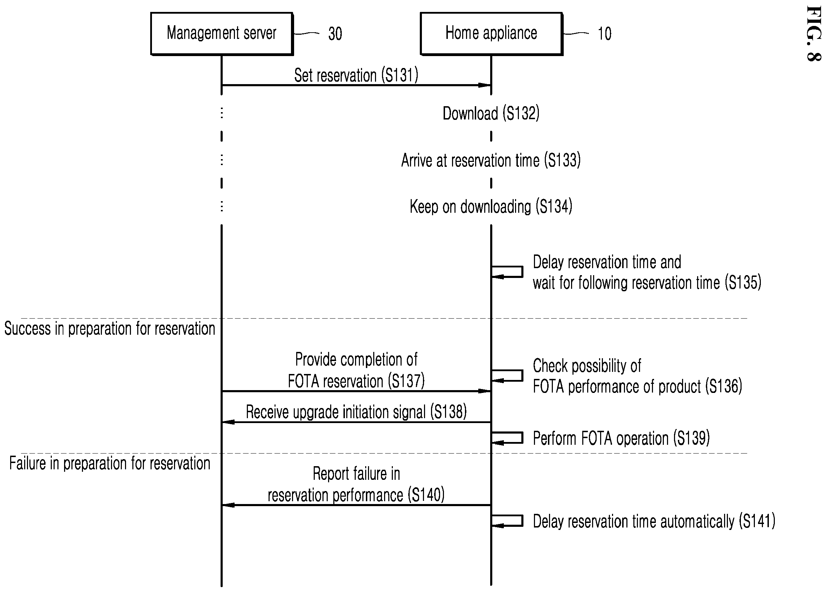

FIG. 8 is a flowchart showing the performance of a reservation in the upgrade method for a home appliance in one embodiment.

Referring to FIG. 8, the management server 30 provides reservation setting to the modem of the home appliance 10 (S 131), and the modem of the home appliance 10 downloads software of the home appliance (S132).

In the case where reservation time arrives in the state where the download is not completed (S133), the modem keeps downloading the software (S134), and waits for the next reservation time while delaying the reservation time for predetermined time (S135).

In the state where the download is completed, the modem checks whether a product can perform FOTA in the case where the reservation time arrives (S136). In the case where the product can perform FOTA, the modem provides completion of a FOTA reservation to the management server 30 (S137), and when receiving an upgrade start signal from the management server 30, performs a FOTA operation (S139).

In the case where the product cannot perform FOTA, the modem provides a failure in reservation performance to the management server 30 (S140). In an example, the modem may determine that FOTA cannot be performed in the case where the reservation time arrives in the state where a product performs its unique function.

In the case where the modem determines that the product cannot perform FOTA, the modem may notify the management server 30 that the product cannot perform FOTA, and may automatically delay reservation time for predetermined time, e.g., for 24 hours (S141). Alternatively, the modem may send a failure message to the user through the user terminal and wait for a change and cancelation of reservation time, an instruction for following performance and the like, or request the same to the user.

A reservation change in the upgrade method for the software of a home appliance in one embodiment is described as follows.

The user may select a corresponding home appliance in the application installed in the user terminal 20 and check an upgrade reservation state.

The user may select the upgrade reservation change, and the application may provide an upgrade reservation pop-up. In an example, the user may select an automatic upgrade after a download.

Alternatively, the user may select an upgrade start time designation. At this time, the application may provide a dialogue for a selection of time, and the user may select time through the dialogue. Alternatively, the user may select a notification as a download is completed.

The application of the user terminal 10 may provide an upgrade method selected by the user to the management server 30.

The management server 30 may deliver the upgrade method selected by the user to the modem of the home appliance 10.

The modem may update and set a download schedule, and trigger a schedule alarm. At this time, the modem may provide reservation FOTA information changed and set to the management server 30.

An initial booting operation in the upgrade method for the software of a home appliance in one embodiment is described as follows.

At a time of initial booting of the home appliance 10, a product may provide a packet in relation to a state to the modem, and the modem may check the packet. As a function control unit 132 performing a unique function of the home appliance 10, the product may perform a washing function of a washing machine, a drying function of a dryer, a an air-conditioning function of a air conditioner, an air-purifying function of an air purifier and the like, depending on the sort of the product.

The modem may check a possibility of reservation FOTA as the modem connects to WiFi.

Based on results of the check of reservation FOTA, the modem may provide a flag signal indicating whether reservation FOTA is possible or impossible to the management server 30.

Additionally, the modem may update a reservation possible state and a reservation impossible state at a time of initial booting, in the upgrade method for the software of a home appliance in one embodiment.

The modem starts to communicate with a product at a time of initial booting, and receives product information from the product. The modem may check whether reservation FOTA is possible, based on the product information, and check whether reservation FOTA is possible through a product type list provided, without a new protocol.

The modem is set to enable reservation FOTA in the case where the sort of the product belongs to a product provided with reservation FOTA.

Additionally, the modem may check whether the product is a product to which a new protocol is applied. In the case of a product to which a new protocol is applied, the product may generate a corresponding fame ID and triggered. The modem may check the frame ID, and check whether reservation FOTA is possible, and based on the frame ID, set a tag to reservation FOTA possible or reservation FOTA impossible.

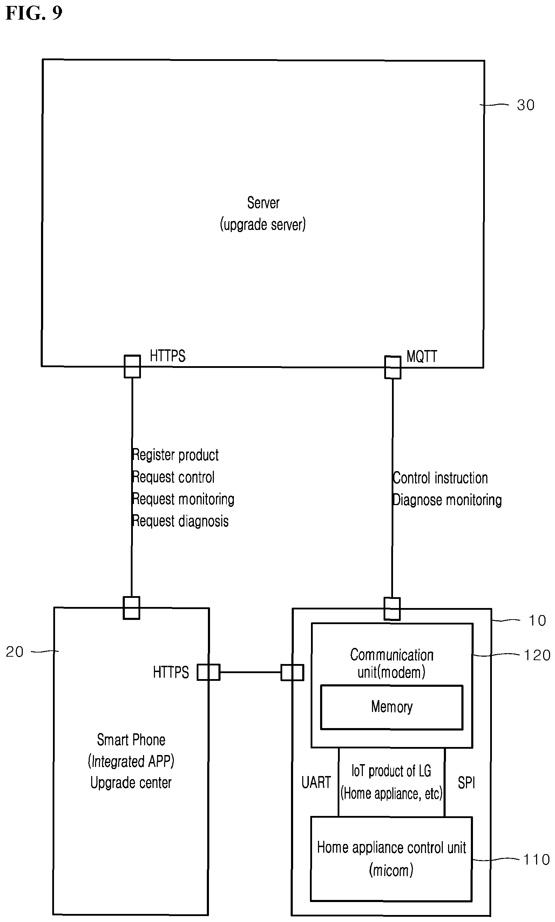

FIG. 9 is a block diagram showing a specific configuration of the upgrade system of a home appliance in one embodiment.

Referring to FIG. 9, the upgrade system of a home appliance comprises a home appliance 10, a user terminal 20 and a server 30.

The home appliance 10 comprises a communication unit 120 and a home appliance control unit 110. The communication unit 120 may comprise a memory storing software downloaded from the server 30. A memory for a download is included in the communication unit 120 in this embodiment, but the memory may be included in the control unit 110 or may be included in a partial area of the memory of the control unit. Software downloaded may be transmitted and written to the memory to the home appliance control unit, based on serial communication, and update an existing control program or be added to a existing control program, to upgrade the home appliance.
In the case of a memory of a control unit, to which a download area is allocated, the download area is completed, and after rebooting, a ... is allocated for a control area, to upgrade the home appliance with new software.

The communication unit 120 may have a function of tracing set time and triggering a reservation, and at a time when triggering of a reservation occurs, may have a function of checking a product state and then determining whether to perform an upgrade of software or to delay a reservation.

Further, the communication unit 120 may have a function of synchronizing and linking with the server 30 in relation to a reservation state. The communication unit 120 may be a modem, a WiFi module and the like, for example.

The communication unit 120 may connect to the server 30 and the user terminal 10 through communicaiton.

The communication unit 120 may download software from the server 30, and depending on an operation state of the home appliance 10, may immediately proceed with an upgrade of software, or delay an upgrade.

The communication unit 120 may download or upgrade software, based on reservation setting set on the user terminal 10.

The home appliance control unit 110 may perform control in relation to a unique function of the home appliance 10.

The home appliance control unit 110 may receive a request to check whether a download or an upgrade is possible from the communication unit 120, and provide a signal indicating whether a download or an upgrade is possible to the communication unit 120. In an example, the home appliance control unit 110 may be a micom, for example.

The user terminal 20 may comprise an application in relation to the home appliance 10. The user terminal 20 may proceed with an upgrade of software of the home appliance 10, through the application. The user terminal 20 may set a software download reservation or a software upgrade reservation of software through the application. The user terminal 20 may be a smartphone, for example.

The server 30 may be a device that manages and upgrades the home appliance 10 remotely. The server 30 may communicably connect to the home appliance 10 and the user terminal 20 through a communication network.

The server 30 may store information for upgrading software of the home appliance 10. The server 30 may manage upgrade reservation information set by the user terminal 10 and deliver the reservation information to the home appliance 10.

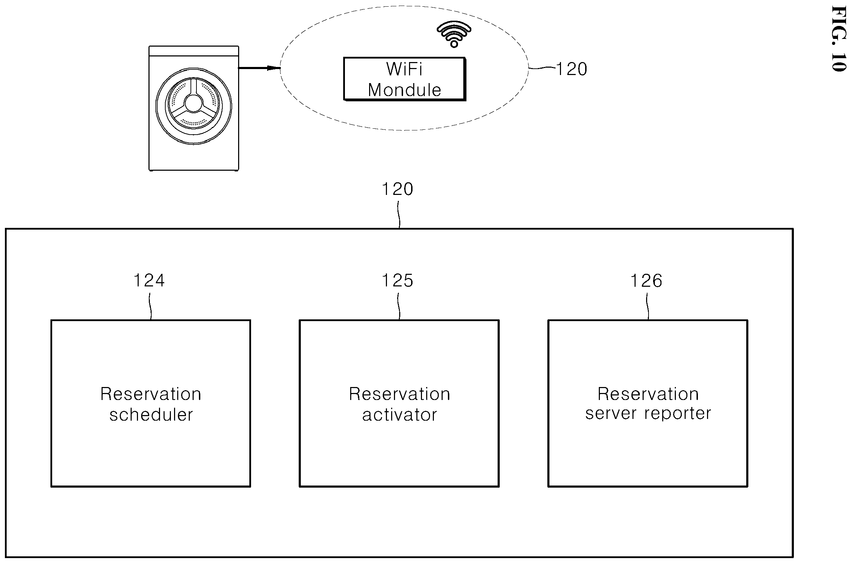

FIG. 10 is a block diagram showing a detailed configuration in relation to each function in a communication unit 120 of a home appliance 10 illustrated in FIG. 9.

Referring to FIG. 10, the communication unit 120 may comprise a reservation scheduler 124, a reservation activator 125, a reservation server reporter 126 as a module for each function. In FIG. 10, a washing machine is illustrated as the home appliance 10, but the home appliance is not limited.

The reservation scheduler 124 is a module that may trace reservation time and trigger a reservation. The reservation activator 125 is a module that determines whether to perform an upgrade of software or to delay a reservation after checking a product state in the case where triggering occurs in the reservation scheduler 124. The reservation time may be set based on a selection of the user, or may be a schedule based on a pre-stored setting cycle or a cycle determined depending on software.

The reservation server reporter 126 is a module that synchronizes and links with the server 30 in relation to a reservation state. The reservation server reporter 126 may provide a reservation state to the server 30 at a time when a reservation proceeds or a reservation is delayed such that the reservation state synchronizes with the home appliance 10.

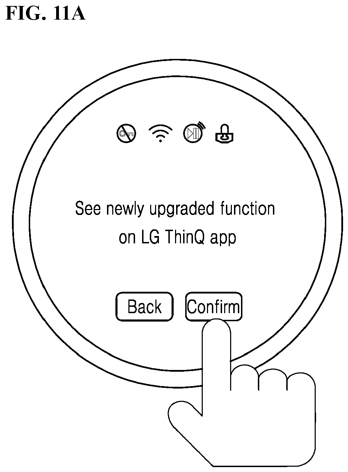

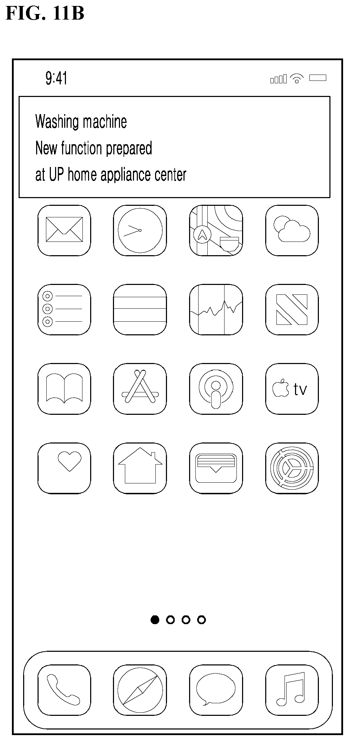

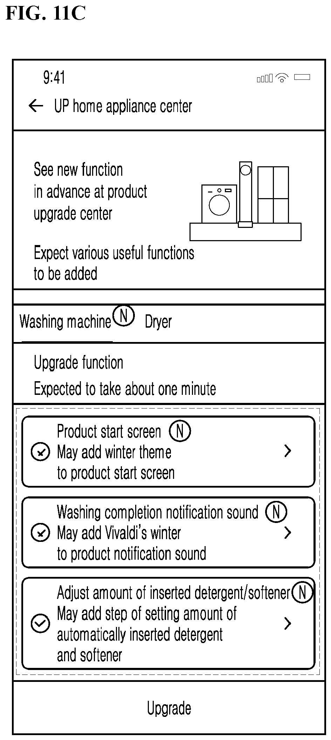

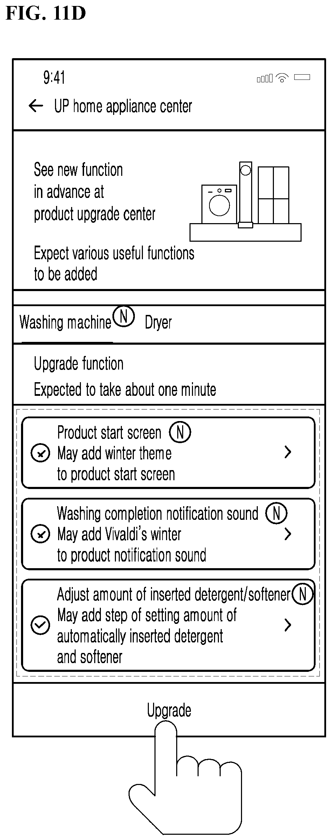

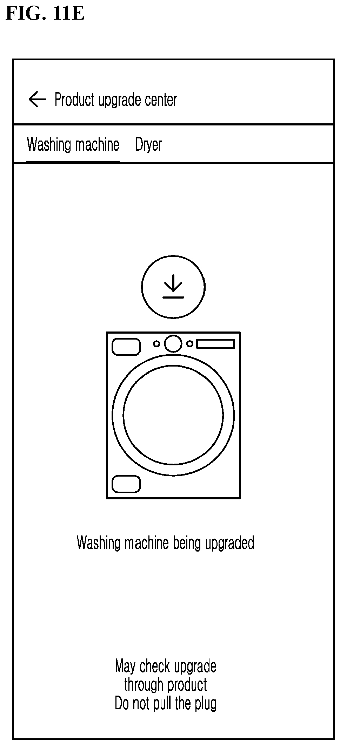

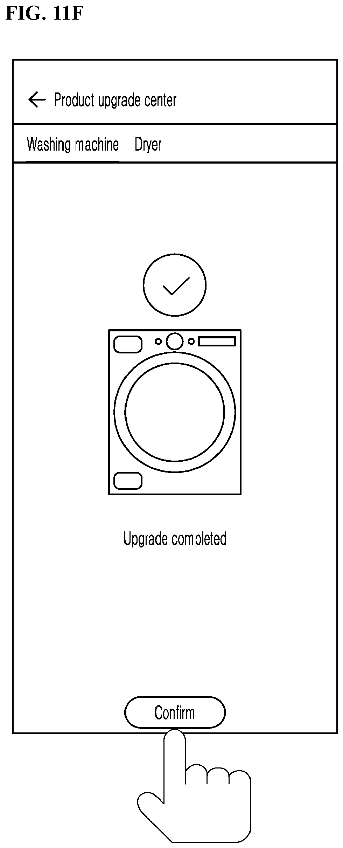

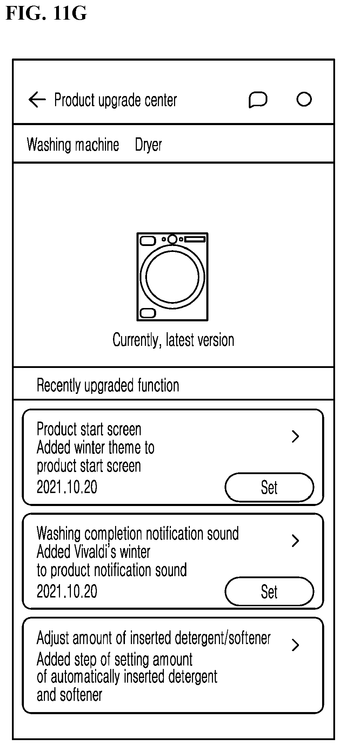

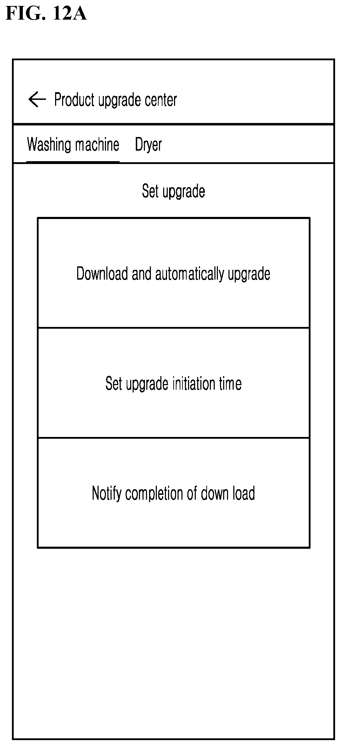

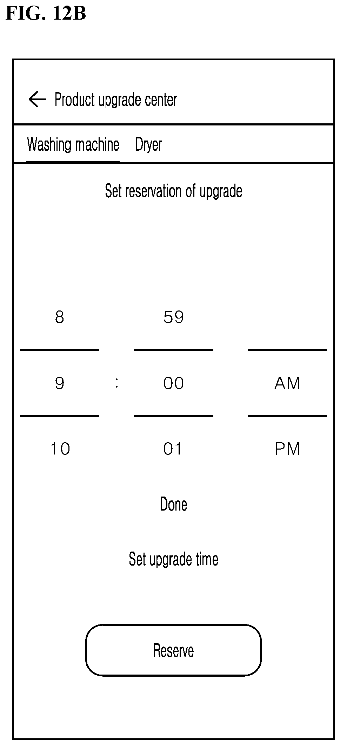

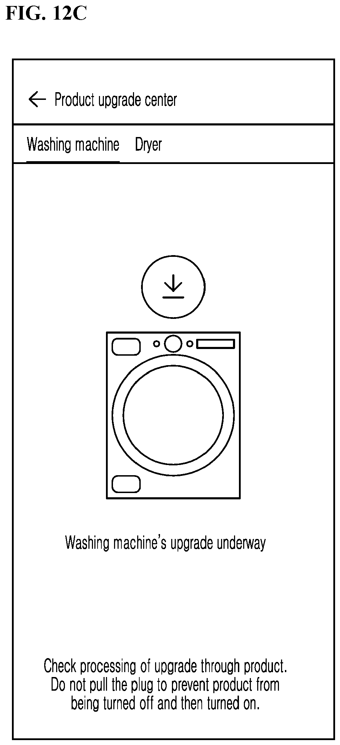

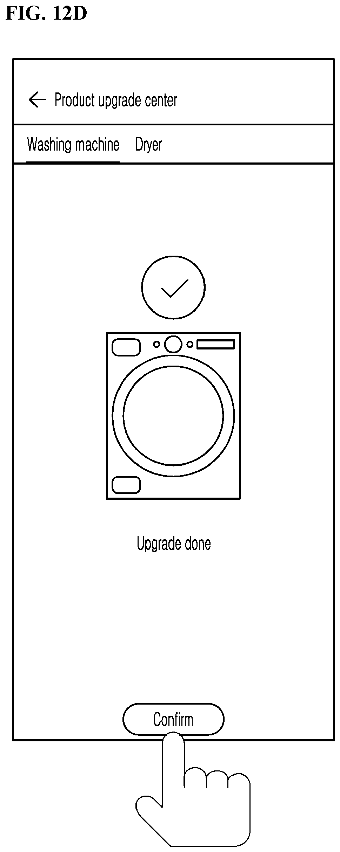

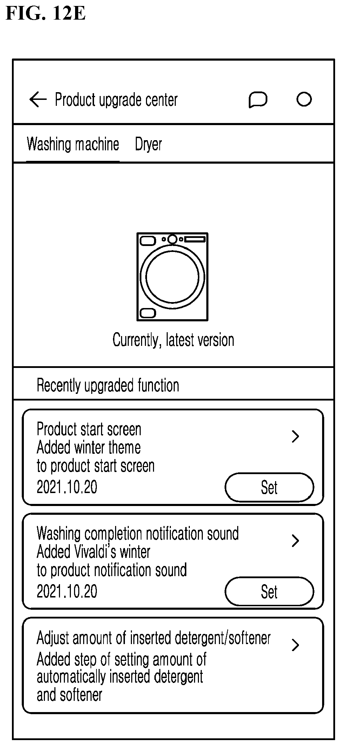

FIGS. 11 and 12 are views showing a user interface unit that proceeds with an upgrade in the user terminal illustrated in FIG. 9.

Referring to FIG. 11, a product may introduce a newly upgraded function, and notify a newly upgraded function to the user terminal 20 through a push message.

In the case where the user accesses the application of the user terminal 20, e.g., a product upgrade center, the application may introduce an experience function at the upper end of the user terminal 20.

Additionally, upgrade functions may be designed to allow the user to upgrade the functions selectively.

In the case where the user pushes Upgrade, an upgrade may proceed immediately. At this time, in the case where a product is operating, an upgrade may be automatically delayed at a time point when the product stops operating or after predetermined time (e.g., after three hours). Further, in the state where a product is turned off, the state may be notified to the user, and in the case where the user pushes the Upgrade later, a notification may proceed again later.

The application of the user terminal 20 may provide an animation showing that an upgrade is proceeding while the upgrade proceeds. Further, the application of the user terminal 20 may display that it listed in a recently upgraded function area in the case where the upgrade is completed, may notify that a current version is the latest version in the case where all functions are upgraded.

Referring to FIG. 12, the application of the user terminal 20 may provide an upgrade setting screen, and the user may set an upgrade schedule on the setting screen.

In an example, the application may provide a screen for selecting an upgrade method such as an automatic upgrade, setting of upgrade start time, a download completion notification and the like.

The automatic upgrade involves starting an upgrade automatically in the case where new software is downloaded completely. The new software is downloaded onto the home appliance from the server and then written, and upgrades existing software. Likewise, as software, a contents program in relation to a function of firmware may also be upgraded.

The setting of upgrade start time involves setting upgrade start time to desired time directly by the user, and in the case where setting start time is pressed, the screen moves to a time setting screen. In an example, a screen for setting upgrade start time or setting a timer which sets the time that an upgrade is started a few hours later. The upgrade start time may be a time point at which a download is started, or a time point at which an upgrade where software is written to a product control unit is started in the state where a download is completed. At a download start time point, an upgrade keeps on performing in the case where a download is completed.

An alarm is used to notify the user that a download is completed after the download is completed.

As a reservation is set, an upgrade is started based on a set schedule.

In the case where a product is being used at a time point when an upgrade is started based on the set schedule, the upgrade may be set to be automatically delayed, e.g., may be set to proceed after the product completes its operation, or after predetermined time.

In the case where a download is not completed at a time point when an upgrade is started, upgrade time is automatically delayed. Further, in the case where a product is turned off or is operating at reservation time, an upgradable time point is automatically delayed for predetermined time.

Even in the case where an upgrade does not proceed past preset reservation time, the reservation time is automatically delayed for predetermined time.

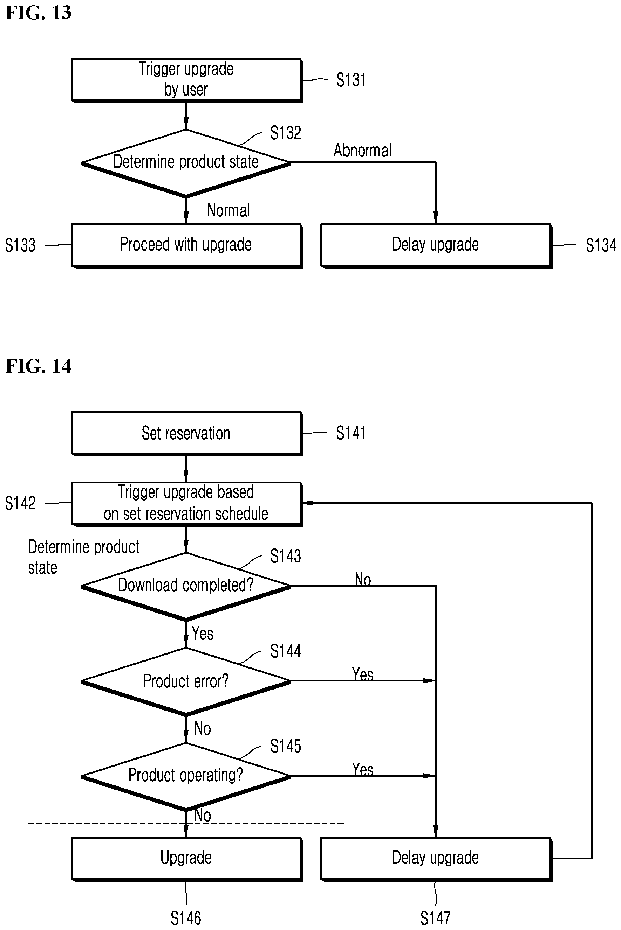

FIG. 13 is a flowchart showing that an upgrade proceeds immediately after completion of a download, in the upgrade method for a home appliance in one embodiment.

Referring to FIG. 13, in the case where a trigger of an upgrade is brought about by the user (S131), the communication unit 120 of the home appliance 10 communicates with the home appliance control unit 110 to determine a product state (S132).

The communication unit 120 proceeds with an upgrade in the case where a product is upgradable (S133), and delays upgrade time in the case where a product is not upgradable (S134).

In the case where an upgrade proceeds, the communication unit 120 notifies the user terminal 20 that the upgrade is proceeding, and in the case where an upgrade is delayed, the communication unit 120 notifies the user terminal 20 that the upgrade is delayed.

The communication unit 120 may determine a product state based on whether a product is abnormal, whether a product operates and the like, and in the case where the product is normal, may proceed with an upgrade. The communication unit 120 may automatically delay an upgrade in the case where a product is abnormal or a product is operating, and may request the user to turn on a product in the case where the product is turned off.

FIG. 14 is a flowchart showing that an upgrade proceeds based on a reservation schedule after completion of a download, in the upgrade method for the software of a home appliance in one embodiment.

Referring to FIG. 14, the communication unit 120 of the home appliance 10 triggers an upgrade based on a set reservation schedule (S142), in the case where a reservation is set (S141).

The communication unit 120 determines a product state in the case where a trigger of an upgrade occurs.

At a time when the communication unit 120 determines a product state, the communication unit 120 determines whether a download is completed (S143), determines whether a product has an error (S144), and determines whether a product is operating (S 145).

In the case where a download is completed, a product has no error, and the product is not operating, the communication unit 120 proceeds with an upgrade (S146).

Also, the communication unit 120 may start a download and proceed with an upgrade at a time point when a trigger of an upgrade occurs.

In the case where a download is not completed or a product has an error or a product is operating, the communication unit 120 delays an upgrade (S147).

The communication unit 120 may delay upgrade time for predetermined time in the case where the communication unit 120 delays an upgrade, and provide a reservation schedule to the server 30 such that the reservation schedule of the communication unit 120 synchronize with the reservation schedule of the server 30.

Additionally, the communication unit 120 may bring about a trigger of an upgrade at changed reservation time, and determine a product state again, to proceed with an upgrade or delay an upgrade, based on the product state.

The communication unit 120 may determine a state of the home appliance at reservation time, and in the case where the home appliance is not upgradable, may automatically delay the reservation time. Alternatively, the communication unit 120 may automatically delay reservation time in the case where the reservation time passes without an upgrade. In an example, the reservation time may be delayed for time corresponding to a preset default value or a value set by the user.

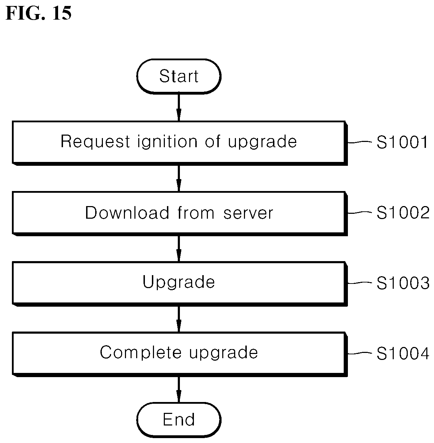

FIG. 15 is a view showing an upgrade process in another embodiment.

In the case where particulars in relation to an upgrade, to be applied to the home appliance, are registered with the management server, an upgrade may proceed after a selection and a download, based on the flow in FIG. 15. This shows an example of a download that is started as the user selects and requests an upgrade before software is downloaded to the home appliance.

As software such as a program, data and the like needed for an upgrade are registered with the management server 30, upgradable software is checked, and a list of upgradable software is displayed through the user interface unit 140 of the home appliance 10 or the terminal interface unit 230 of the user terminal 20.

Additionally, as the user selects one or more of upgradable software through the user interface unit 140 of the home appliance 10 or the terminal interface unit 230 of the user terminal 20,the home appliance 10 or the user terminal 20 requests the management server 30 to start an upgrade (S1001).

Then the home appliance 10 downloads the selected software from the management server 30 (S1002). As the download is completed, the home appliance 10 installs/writes the downloaded software in the home appliance control unit to proceed with an upgrade (S1003).

As the upgrade is completed (S1004), the home appliance 10 may perform rebooting. Additionally, the user interface unit 140 of the home appliance 10 or the terminal interface unit 230 of the user terminal 20 may notify or display an upgraded function.

The upgrade method for a home appliance of one embodiment comprises setting upgrade reservation time, and writing new software registered with the server to the control unit of the home appliance and proceeding with an upgrade at the reservation time.

In the embodiment, in the case where new software registered with the server starts to be downloaded at the reservation time and then the download is completed, the software is written to the control unit of the home appliance.

In the embodiment, new software is downloaded in advance, and then is written to the control unit of the home appliance at the reservation time.

In the embodiment, the step of setting upgrade reservation time starts based on a reservation schedule set in advance.

In the embodiment, the step of setting upgrade reservation time starts based on a reservation schedule set by the user.

In the embodiment, the step of setting upgrade reservation time starts based on the user's triggering.

In the embodiment, in the case where an upgrade is not possible as a result of determination of the state of the home appliance at reservation time, the reservation time is automatically delayed.

In the embodiment, in the case where an upgrade is not possible as a result of determination of the state of the home appliance at reservation time, a failure message is transmitted to the server and the user terminal.

In the embodiment, in the case where reservation time passes without an upgrade, the reservation time is automatically delayed.

An upgrade system for a home appliance of one embodiment comprises a server registering new software of a home appliance, and performs an upgrade by setting upgrade reservation time and writing the new software registered with the server to the control unit of the home appliance at the reservation time.

The upgrade system for a home appliance of one embodiment comprises a server 30 with which software of a home appliance is registered, and a home appliance 10 which downloads software from the server 30 and stores the software, and writes the downloaded software to itself depending on its operation state, at a time when an upgrade is triggered, to proceed with an upgrade.

The upgrade system for a home appliance of one embodiment comprises a server 30 with which software of a home appliance is registered, and a home appliance 10 that downloads software from the server 30 and stores the software at upgrade reservation time and proceeds with an upgrade depending on an operation state of the home appliance 10.

In the embodiment, the home appliance brings about a trigger of an upgrade based on a reservation schedule set in advance or the user's triggering.

In the embodiment, the home appliance 10 proceeds with an upgrade after the home appliance 10 ends operating, in the case where the home appliance 10 is operating at upgrade reservation time.

In the embodiment, the home appliance 10 checks whether an upgrade is ready at upgrade reservation time, and in the case where an upgrade is ready, transmits a trigger signal to the sever, and receives an upgrade start signal from the server 30, to proceed with an upgrade.

In the embodiment, the home appliance 10 delays reservation time for predetermined time in the case where a product is operating at upgrade reservation time.

In the embodiment, the home appliance 10 reports on the reason for an upgrade failure to the server 30.

In the embodiment, the home appliance 10 delays reservation time for predetermined time, in the case where the reservation time arrives in the state where a download is not completed.

In the embodiment, the home appliance 10 sets at least one of download completion time, upgrade designation time and product operation completion time as upgrade reservation time.

In the embodiment, the home appliance 10 receives upgrade reservation time selected by the user from the server 30 and sets an upgrade schedule.

In the embodiment, the server 30 receives upgrade reservation time selected through the application of the user terminal 20 from the user terminal 20 and delivers the upgrade reservation time to the home appliance 10.

In the embodiment, the home appliance 10 comprises a communication unit 120 communicating with the server 30 and the user terminal 20, and a function control unit 132 performing a unique function of the home appliance 10, and the communication unit 120 traces upgrade reservation time and proceeds with an upgrade at the reservation time depending on an operation state of the function control unit 132.

In the embodiment, the communication unit 120 comprises a storage unit 123 that stores software downloaded from the server 30, and a communication control unit 122 that traces reservation time and performs triggering, and as triggering occurs, proceeds with an upgrade or delays the reservation time depending on an operation state of the function control unit, and synchronizes with the server 30 with respect to the reservation time.

In the embodiment, the communication unit 120 checks a state of the function control unit at a time of initial booting, to check whether an upgrade is possible.

In the embodiment, the communication unit 120 transmits a flag signal indicating whether an upgrade is possible to the server 30.

The upgrade method for a home appliance of one embodiment comprises downloading software from the server and storing the software; and proceeding with an upgrade of software depending on an operation state of a home appliance at a time when a trigger of an upgrade occurs.

In the upgrade system and upgrade method for a home appliance of one embodiment, an upgrade may proceed at a time when a home appliance is not used, as described above.

Additionally, in the upgrade system and upgrade method for a home appliance of one embodiment, an upgrade may proceed depending on an operation state of a home appliance or proceed after a home appliance s ends operating.

Further, in the upgrade system and upgrade method for a home appliance of one embodiment, upgrade reservation time may be automatically delayed in the case where a home appliance is operating at the upgrade reservation time.

Further, in the upgrade system and upgrade method for a home appliance of one embodiment, the user does not need to trigger an upgrade again in the case where an upgrade is tried and failed while a home appliance is operating.

Further, in the upgrade system and upgrade method for a home appliance of one embodiment, a home appliance may be prevented from falling into a brick mode in the case where an upgrade is tried and failed while a home appliance is operating.

Further, in the upgrade system and upgrade method for a home appliance of one embodiment, the user may select an upgrade triggering time point.

Further, in the upgrade system and upgrade method for a home appliance of one embodiment, a triggering time point based on a state of a home appliance may be delayed automatically at a time of triggering of an upgrade.

Furthermore, in the upgrade system and upgrade method for a home appliance of one embodiment, an upgrade triggering time point based on a state of a home appliance may be delayed automatically, thereby preventing a failure in an upgrade.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the range of the disclosure though not explicitly described in the description of the embodiment.

## Claims

1. An upgrade method for a home appliance, comprising:
setting upgrade reservation time; and
proceeding with an upgrade by writing new software registered with a server to a control unit of a home appliance at the reservation time.

2. The upgrade method of claim 1, wherein the upgrade method comprises starting to download the new software registered with the server at the reservation time, and as the download is completed, writing the software to the control unit.

3. The upgrade method of claim 1, wherein the upgrade method comprises downloading the new software in advance, and writing the new software to the control unit at the reservation time.

4. The upgrade method of claim 1, wherein the step of setting upgrade reservation time starts based on a reservation schedule set in advance.

5. The upgrade of claim 1, wherein the step of setting upgrade reservation time starts based on a reservation schedule set by a user.

6. The upgrade method of claim 1, wherein the step of setting upgrade reservation time starts based on triggering of a user.

7. The upgrade method of claim 1, wherein the upgrade method comprises checking a state of the home appliance at the reservation time, and in a case where an upgrade is not possible, delaying the reservation time automatically.

8. The upgrade method of claim 1, wherein the upgrade method comprises delaying the reservation time automatically in a case where the reservation time passes without the upgrade.

9. The upgrade method of claim 1, wherein the upgrade method comprises checking a state of the home appliance at the reservation time, and in a case where an upgrade is not possible, transmitting a failure message to the server and a user terminal.

10. An upgrade system for a home appliance, comprising:
a server configured to register new software of a home appliance; and
a home appliance configured to set upgrade reservation time and write new software registered with the server to a control unit of a home appliance at the reservation time, to proceed with an upgrade.

11. The upgrade system of claim 10, wherein the home appliance starts to download new software registered with the server at the reservation time, and as the download is completed, writes the software to the control unit.

12. The upgrade system of claim 10, wherein the home appliance downloads the new software in advance and writes the new software to the control unit at the reservation time.

13. The upgrade system of claim 10, wherein the step of setting upgrade reservation time starts based on a reservations schedule set in advance.

14. The upgrade system of claim 10, wherein the step of setting upgrade reservation time starts based on a reservation schedule set by a user.

15. The upgrade system of claim 10, wherein the step of setting upgrade reservation time starts based on triggering of a user.

16. The upgrade system of claim 10, wherein the home appliance checks a state of the home appliance at the reservation time, and in a case where an upgrade is not possible, delays the reservation time automatically.

17. The upgrade system of claim 10, wherein the home appliance checks a state of the home appliance at the reservation time, and in a case where an upgrade is not possible, transmits a failure message to the server and a user terminal.

18. An upgrade system for a home appliance, comprising:
a server configured to register software of a home appliance; and
a home appliance configured to download the software from the server and store the software, and in a case where a trigger of an upgrade occurs, to proceed with an upgrade depending on an operation state of a home appliance.

19. The upgrade system of claim 18, wherein the home appliance generates a trigger of the upgrade, based on a reservation schedule set in advance or a trigger of a user.

20. The upgrade system of claim 18, wherein the home appliance ends operating and then proceeds with an upgrade at a time when the trigger of an upgrade occurs, in a case where the home appliance is operating.

21. The upgrade system of claim 18, wherein the home appliance checks whether the home appliance is upgradable at a time when the trigger of an upgrade occurs, and in a case where an upgrade is possible, transmits a trigger signal to the server and receives an upgrade start signal from the server, to proceed with the upgrade.

22. The upgrade system of claim 18, wherein the home appliance delays reservation time for predetermined time, in a case where the home appliance is operating, at a time when the trigger of an upgrade occurs based on a reservation schedule.

23. The upgrade system of claim 18, wherein the home appliance delays reservation time for predetermined time, in a state where the software is not completely downloaded, at a time when a trigger occurs based on a reservation schedule.

24. The upgrade system of claim 18, wherein the home appliance sets at least one of download completion time, upgrade designation time, and product operation completion time as the upgrade reservation.

25. The upgrade system of claim 18, wherein the home appliance receives the upgrade reservation selected by a user from the server or a user terminal and sets a reservation schedule.

26. The upgrade system of claim 18, wherein the server receives the upgrade reservation selected through an application of a user terminal from the user terminal, and delivers the upgrade reservation to the home appliance.

27. The upgrade system of claim 18, the home appliance, comprising:
a communication unit configured to communicate with the server and a user terminal; and
a function control unit configured to perform a unique function of the home appliance,
wherein the communication unit traces upgrade reservation time based on a reservation schedule, and proceeds with an upgrade depending on an operation state of the function control unit, at the reservation time.

28. The upgrade system of claim 27, the communication unit, comprising:
a storage unit configured to store the software downloaded from the server; and
a communication control unit configured to trace the reservation time and perform triggering, and as the triggering occurs, to proceed with the upgrade or delay the reservation time depending on an operation state of the function control unit, and to synchronize with the server in relation to the reservation time.

29. The upgrade system of claim 27, wherein the communication unit checks a state of the function control unit at a time of initial booting to check whether the upgrade is possible.

30. The upgrade system of claim 27, wherein the communication unit transmits a flag signal indicating whether the upgrade is possible to the server.

31. An upgrade method for a home appliance, comprising:
downloading software from a server and storing the software; and
proceeding with an upgrade of the software depending on an operation state of a home appliance at a time when a trigger of an upgrade occurs.

32. The upgrade method of claim 31, wherein the upgrade method further comprises generating the trigger of an upgrade based on a reservation schedule set in advance or triggering of a user.

33. The upgrade method of claim 31, wherein the step of proceeding with an upgrade comprises proceeding with an upgrade after the home appliance ends operating, in a case where the home appliance is operating, at a time when the trigger of an upgrade occurs.

34. The upgrade method of claim 31, the step of proceeding with an upgrade, comprising:
checking whether the home appliance is ready for an upgrade at a time when the trigger of an upgrade occurs;
transmitting a trigger signal to the server in a case where the home appliance is ready for an upgrade; and
receiving an upgrade start signal from the server and proceeding with the upgrade.

35. The upgrade method of claim 31, wherein the step of proceeding with an upgrade comprises delaying reservation time for predetermined time in a case where the home appliance is operating, at a time when the trigger of an upgrade occurs based on a reservation schedule.

36. The upgrade method of claim 31, wherein the step of proceeding with an upgrade comprises delaying reservation time for predetermined time in a case where the download is not completed, at a time when the trigger of an upgrade occurs.

37. The upgrade method of claim 31, wherein the upgrade method further comprises setting at least one of download completion time, upgrade designation time and product operation completion time as the upgrade reservation.
